# EUROPEAN PATENT APPLICATION

(11) **EP 4 783 636 A1**
(43) Date of publication of application: **29.07.2026**
(21) Application number: 24879149.3
(22) Date of filing: 18.10.2024
(51) Int. Cl.: H04W 12/065

(54) **METHOD FOR VERIFYING USER DURING COMMUNICATION**

(30) Priority: 19.10.2023 CN 202311363942
(71) Applicant: HUAWEI TECHNOLOGIES CO., LTD., Shenzhen 518129 (CN)
(72) Inventor: ZHU, Jintao, Shenzhen, Guangdong 518129 (CN); LI, Fei, Shenzhen, Guangdong 518129 (CN)
(74) Representative: Goddar, Heinz J.
(86) International application number: PCT/CN2024/125878
(87) International publication number: WO 2025/082509

(57) **Abstract**

Embodiments of this disclosure provide a method, a system, a storage medium, and a program product. The method includes: A first network device obtains first biometric identification information of a user of a first terminal device, and sends, based on a first authentication request message that is received from a second network device and that is used to authenticate the user, the first biometric identification information to the second network device or a third network device. The first biometric identification information is used to perform identity authentication on the user of the first terminal device. According to embodiments of this disclosure, authentication on a natural person identity can be provided in communication.

## Description

### TECHNICAL FIELD

Embodiments of this disclosure mainly relate to the field of communication technologies. More specifically, embodiments of this disclosure relate to a user authentication method in communication, a system, an electronic device, a computer-readable storage medium, and a computer program product.

### BACKGROUND

With further development of 5th generation technologies, in the coming 5.5th generation and even the next generation network 6th generation era, a new video-based interactive call mode will become a new featured call service. In new call scenarios, generating a digital human based on the AIGC (artificial intelligence generated content) technology is a typical service. However, this service also brings great challenges to establishment of trust between communication parties. Currently, faces can be tampered with a technical means (on a network side), and direct facial tampering attacks on terminal sides are more common and easy to implement. A conventional uplink media stream may be generated in real time in an AIGC module of a 5G core network (5th Generation Core, 5GC), so that uplink bandwidth efficiency can be improved. In this case, the network side needs to prove that the media stream or a generated media stream is trustworthy.

A general communication authentication mechanism is that user equipment (User Equipment, UE) completes IMS key allocation/identity authentication and key agreement (Authentication and Key Agreement, AKA) authentication in a registration process of an IP multimedia subsystem (IP Multimedia Subsystem, IMS) network, a certificate and an identifier that are used for authentication are respectively a long-term key K and an IMS private identity (IMS Private Identity, IMPI) that are stored in a subscriber identity module (Subscriber Identity Module, SIM) card. That is, the IMS network obtains a binding relationship between the IMPI (which may correspond to a phone number) and the card. Therefore, when one UE initiates a call to another UE, the network can only ensure, based on a binding relationship between a phone number and a card, that a number of the UE initiating the call cannot be forged.

### SUMMARY

Embodiments of this disclosure provide an authentication method in communication. In embodiments of this disclosure, biometric identification information of a user is obtained on a network side, and an identity of the user in communication is authenticated based on the biometric identification information, so that real identities of both parties in communication can be authenticated.

According to a first aspect of this disclosure, a method is provided. The method includes: A first network device obtains first biometric identification information of a user of a first terminal device, and sends, based on a first authentication request message that is received from the second network device and that is used to authenticate the user, the first biometric identification information to a second network device or a third network device. The first biometric identification information is used to perform identity authentication on the user of the first terminal device. Therefore, the user can be authenticated on a network side based on the biometric identification information.

In some embodiments of the first aspect, the method further includes: determining that the first network device does not store the first biometric identification information, where that the first network device obtains the first biometric identification information of the user of the first terminal device includes: receiving, from the second network device, the first authentication request message that is used to authenticate the user, where the authentication request message carries the first biometric identification information; and storing the first biometric identification information. Therefore, when there is no first biometric identification information, the biometric identification information may be obtained from the user equipment. This improves flexibility of obtaining the biometric identification information.

In some embodiments of the first aspect, the method further includes: determining that the first network device stores first biometric identification information; and that the first network device obtains the first biometric identification information of the user of the first terminal device includes: obtaining the first biometric identification information of the user of the first terminal device from the stored first biometric identification information. Therefore, the stored biometric identification information can be used in an authentication process.

In some embodiments of the first aspect, the first authentication request message includes an identifier of the first terminal device, second biometric identification information that is of the user and that is collected by the first terminal device, and an authentication identifier, and the method further includes: in response to the fact that the first network device does not store the second biometric identification information or stored biometric identification information does not match the second biometric identification information, verifying the second biometric identification information via a fifth network device. Therefore, the biometric identification information may be verified through the third party. This improves authentication flexibility.

In some embodiments of the first aspect, the verifying the second biometric identification information via the fifth network device includes: sending the authentication identifier to the fifth network device, where the authentication identifier is used to verify the second biometric identification information; when authentication succeeds at the fifth network device, receiving third biometric identification information corresponding to the second biometric identification information; storing a relationship between the first terminal device and the second biometric identification information and a relationship between the first terminal device and the third biometric identification information; and sending authentication response information to the second network device. Therefore, the biometric identification information may be verified and sent through the third party. This improves flexibility.

In some embodiments of the first aspect, the second biometric identification information and the third biometric identification information are sent after being encrypted. In this way, user privacy can be protected.

In some embodiments of the first aspect, verifying the second biometric identification information via the fifth network device includes: sending the second biometric identification information and the authentication identifier to the fifth network device, where the authentication identifier is used to verify the second biometric identification information; receiving an authentication result from the fifth network device; and sending the authentication response information to the second network device. Therefore, the biometric identification information may be verified through the third party. This improves flexibility.

In some embodiments of the first aspect, the method further includes: receiving a registration request message from the first terminal device, where the registration request message includes identification information of the first terminal device, feature identification capability information of the first terminal device, and/or anti-counterfeit authentication capability information of the first terminal device; in response to the fact that the first network device stores the feature identification capability information of the first terminal device and/or the anti-counterfeit authentication capability information of the first terminal device, verifying whether the stored feature identification capability information and/or stored anti-counterfeit authentication capability information match the feature identification capability information and/or the anti-counterfeit authentication capability information that are/is carried in the registration request message; and sending a registration request response to the first terminal device, where the registration request response includes an anti-counterfeit authentication policy corresponding to the first terminal device. Therefore, the anti-counterfeit authentication policy may be determined in a registration request phase, to accurately determine an authentication manner.

In some embodiments of the first aspect, the method further includes: receiving a registration request message from the first terminal device, where the registration request message includes identification information of the first terminal device, feature identification capability information of the first terminal device, and/or anti-counterfeit authentication capability information of the first terminal device; in response to the fact that the first network device does not store the feature identification capability information of the first terminal device and/or the anti-counterfeit authentication capability information of the first terminal device that are/is recorded by the first network device, storing the identification information of the first terminal device, the feature identification capability information of the first terminal device, and/or the anti-counterfeit authentication capability information of the first terminal device that are/is carried in the registration request message; and sending a registration request response to the first terminal device, where the registration request response includes an anti-counterfeit authentication policy corresponding to the first terminal device. Therefore, the authentication capability may be stored and the anti-counterfeit authentication policy may be determined in a registration request phase, to accurately determine an authentication manner.

In some embodiments of the first aspect, the method further includes: receiving a registration request message from the first terminal device, where the registration request message does not include feature identification capability information of the first terminal device and/or anti-counterfeit authentication capability information of the first terminal device; and sending a registration request response to the first terminal device, where the registration request response includes a default anti-counterfeit authentication policy. Therefore, the default authentication policy may be sent to the terminal, to ensure that the terminal obtains the anti-counterfeit authentication policy.

In some embodiments of the first aspect, the method further includes: sending an authentication policy synchronization message to the third network device, where the authentication policy synchronization message includes the anti-counterfeit authentication policy. Therefore, the anti-counterfeit authentication policy may be sent to the third network device, to distribute the anti-counterfeit authentication policy.

In some embodiments of the first aspect, the method further includes: sending a media plane network device discovery request message to a fourth network device, where the media plane network device discovery request message includes an anti-counterfeit authentication capability; receiving a media plane network device discovery response message from the fourth network device; and sending the anti-counterfeit authentication policy to the third network device. In this way, the anti-counterfeit authentication policy can be registered.

In some embodiments of the first aspect, the anti-counterfeit authentication policy is associated with a function supported by the first terminal device, and the anti-counterfeit authentication policy includes: authentication on the network side, authentication on a terminal side, authentication on both the network side and the terminal side, and/or non-authentication on either the network side or the terminal side. Therefore, a plurality of authentication manners may be implemented.

In some embodiments of the first aspect, the first authentication request message includes the identifier of the first terminal device, and the method further includes: querying the stored first biometric identification information based on the identifier of the first terminal device. Therefore, the biometric identification information may be queried based on the terminal device identifier.

In some embodiments of the first aspect, the method further includes: receiving a second authentication request message from the third network device, where the second authentication request message includes original information of service information or the second biometric identification information obtained from the original information and an identifier of the user of the first terminal device that is used to verify the second biometric identification information; and sending an authentication response to the third network device. Therefore, the biometric identification information can be verified in a service process. This improves security.

According to a second aspect of this disclosure, a method is provided. The method includes: A second network device receives a service request message from a first terminal device; sends, to a first network device based on the received service request message, a first authentication request message for verifying a user of the first terminal device; and receives a first authentication response message for the first authentication request message from the first network device. In this way, the second network device may process a corresponding message for user authentication.

In some embodiments of the second aspect, the first authentication response message includes first biometric identification information of the user of the first terminal device, and the method further includes: sending the first biometric identification information and/or a detection algorithm to a third network device, where the first biometric identification information is used to authenticate the user of the first terminal device. Therefore, a biometric identifier and the detection algorithm may be sent to the third network device, to implement authentication flexibility.

In some embodiments of the second aspect, the first authentication request message and/or the first authentication response message include/includes collected second biometric identification information, and the method further includes: sending the second biometric identification information to the third network device, where the second biometric identification information is used to authenticate the user of the first terminal device. Therefore, the biometric identifier may be sent to the third network device.

In some embodiments of the second aspect, the first authentication request message includes the collected second biometric identification information and an authentication identifier. Therefore, the authentication request message may carry the corresponding biometric identifier and the authentication identifier.

According to a third aspect of this disclosure, a method is provided. The method includes: A third network device receives first biometric identification information of a user of a first terminal device from a first network device or a second network device; obtains second biometric identification information from a service message based on the service message received from the first terminal device; and authenticates the user based on the first biometric identification information and the second biometric identification information. In this way, the user can be authenticated based on the biometric identification information.

In some embodiments of the third aspect, the method further includes: storing an identifier of the first terminal device and the first biometric identification information. Therefore, the network device stores corresponding information.

In some embodiments of the third aspect, the method further includes: sending a second authentication request message to the first network device, where the second authentication request message includes original information of the service message or the second biometric identification information and an identifier of the user of the first terminal device; and receiving a second authentication response message for the second authentication request from the first network device. Therefore, the user may be authenticated via the first network device.

In some embodiments of the third aspect, the method further includes: in response to a failure of the authentication, sending, to a second terminal device, authentication prompt information indicating that the authentication on the user fails. In this way, the user can receive the prompt information.

In some embodiments of the third aspect, the method further includes: receiving an anti-counterfeit authentication policy for the first terminal device from the first network device. In this way, the anti-counterfeit authentication policy can be received, and the anti-counterfeit authentication policy can be distributed.

In some embodiments of the third aspect, the method further includes: in response to success of the authentication, generating a media stream based on the second biometric identification information and signing the media stream; and sending the media stream and the signature to the second terminal device. In this way, the media stream can be signed, to improve security.

In some embodiments of the third aspect, the method further includes: receiving third biometric identification information from the first network device, where the third biometric identification information is provided by a fifth network device and corresponds to the second biometric identification information. Therefore, the biometric identification information may be obtained through a third party.

According to a fourth aspect of this disclosure, a method is provided. The method includes: A first terminal device sends a service request message to a second network device, where the service request message includes first biometric identification information of a user of the first terminal device. In this way, the terminal sends the biometric identification information.

In some embodiments of the fourth aspect, the method further includes: sending a registration request message to the second network device, where the registration request message includes identification information of the first terminal device, feature identification capability information of the first terminal device, and anti-counterfeit authentication capability information of the first terminal device; and receiving a registration request response from a first network device, where the registration request response includes an anti-counterfeit authentication policy corresponding to the first terminal device. In this way, the terminal obtains the anti-counterfeit authentication policy.

In some embodiments of the fourth aspect, the service request message includes an identifier of the first terminal device, second biometric identification information that is of the user and that is collected by the first terminal device, and an authentication identifier. In this way, the collected identification information and the authentication identifier are sent through a message.

According to a fifth aspect of this disclosure, a method is provided. The method includes: A second terminal device sends, to a third network device, a second authentication request message that is used to authenticate a user of a first terminal device; and receives a second authentication response message for the second authentication request message from the third network device. Therefore, an authentication result may be received.

In some embodiments of the fifth aspect, the method further includes: receiving authentication prompt information from the third network device, where the authentication prompt information indicates that authentication on the user fails. In this way, corresponding authentication prompt information may be received.

According to a sixth aspect of this disclosure, a method is provided. The method includes: A first network device obtains first biometric identification information of a user of a first terminal device; the first network device stores the first biometric identification information; a second network device receives a service request message from the first terminal device; the second network device sends, to the first network device based on the received service request message, a first authentication request message that is used to authenticate the user of the first terminal device; and the first network device sends the first biometric identification information to the second network device or a third network device based on the first authentication request message of the user, where the first biometric identification information is used to perform identity authentication on the user of the first terminal device.

In some embodiments of the sixth aspect, the method further includes: The third network device obtains second biometric identification information from a service message based on the service message received from the first terminal device; and the third network device authenticates the user based on the first biometric identification information and the second biometric identification information.

According to a seventh aspect of this disclosure, a method is provided. The method includes: A first network device obtains first biometric identification information of a user of a first terminal device; the first network device stores the first biometric identification information; a second network device receives a service request message from the first terminal device; the second network device sends, to the first network device based on the received service request message, a first authentication request message that is used to authenticate the user of the first terminal device; and the first network device sends the first biometric identification information to the second network device or a third network device based on the first authentication request message of the user, where the first biometric identification information is used to perform identity authentication on the user of the first terminal device. In this way, a natural person identity of the user can be authenticated on a network side. This improves security.

According to an eighth aspect of this disclosure, a system is provided. The system includes: a first network device, configured to perform the method according to any one of the first aspect; a second network device, configured to perform the method according to any one of the second aspect; and a third network device, configured to perform the method according to any one of the third aspect.

According to a ninth aspect of this disclosure, an electronic device is provided, including: at least one computing unit; and at least one memory, where the at least one memory is coupled to the at least one computing unit and stores instructions for execution by the at least one computing unit. When the instructions are executed by the at least one computing unit, the device is enabled to perform the method according to the first aspect to the seventh aspect.

According to a tenth aspect of this disclosure, a computer-readable storage medium is provided. The computer-readable storage medium stores a computer program. When the program is executed by a processor, the method according to the first aspect to the seventh aspect is implemented.

According to an eleventh aspect of this disclosure, a computer program product is provided, including computer-executable instructions. When the computer-executable instructions are executed by a processor, a device is enabled to perform the method according to the first aspect to the seventh aspect.

### BRIEF DESCRIPTION OF DRAWINGS

The foregoing and other features, advantages, and aspects of embodiments of this disclosure become more apparent with reference to accompanying drawings and the following detailed descriptions. In the accompanying drawings, same or similar reference numerals indicate same or similar elements.
FIG. 1 is a diagram of an example environment in which a plurality of embodiments of this disclosure can be implemented;
FIG. 2 is a diagram of a procedure according to some embodiments of this disclosure;
FIG. 3 is a general diagram of a user authentication procedure according to some embodiments of this disclosure;
FIG. 4A and FIG. 4B are a diagram of a user authentication procedure based on preregistration and streaming media according to some embodiments of this disclosure;
FIG. 5A and FIG. 5B are a diagram of an authentication capability configuration procedure in a configuration phase according to some embodiments of this disclosure;
FIG. 6A and FIG. 6B are a diagram of an exception prompt procedure in service interaction according to some embodiments of this disclosure;
FIG. 7A and FIG. 7B are a diagram of a procedure of reporting biometric identification information by a terminal according to some embodiments of this disclosure;
FIG. 8A and FIG. 8B are a diagram of a procedure of obtaining biometric identification information through an authority according to some embodiments of this disclosure;
FIG. 9 is a block diagram of a method performed by a first network device according to some embodiments of this disclosure;
FIG. 10 is a block diagram of a method performed by a second network device according to some embodiments of this disclosure;
FIG. 11 is a block diagram of a method performed by a third network device according to some embodiments of this disclosure;
FIG. 12 is a block diagram of a method performed by a first terminal device according to some embodiments of this disclosure;
FIG. 13 is a block diagram of a method performed by a second terminal device according to some embodiments of this disclosure; and
FIG. 14 is a block diagram of an electronic device that can implement various embodiments of this disclosure.

### DESCRIPTION OF EMBODIMENTS

Embodiments of this disclosure are described in more detail in the following with reference to accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

Terms used in the following embodiments of this application are merely intended to describe specific embodiments, but are not intended to limit this application. As used in this specification and the claims of this application, a singular expression form, "one", "a", "said", "foregoing", "the", or "this", is intended to also include a plural expression form, unless clearly indicated to the contrary in the context. It should be further understood that the term "and/or" used in this application means and includes any or all possible combinations of one or more listed items.

In the descriptions of embodiments of this application, the term "include" and similar terms thereof should be understood as open inclusion, that is, "include but not limited to". The term "based on" should be understood as "at least partially based on". The term "one embodiment" or "this embodiment" should be understood as "at least one embodiment". It should be understood that expressions such as "first", "second", and "third" are merely intended to indicate that a plurality of objects may be different, but it is not excluded that two objects are the same. The expressions such as "first", "second", and "third" should not be construed as any limitation on the embodiments. The terms "first" and "second" are merely intended for a purpose of description, and shall not be understood as an indication or implication of relative importance or an implicit indication of a quantity of indicated technical features. Therefore, a feature limited by "first" and "second" may explicitly or implicitly include one or more features. In the descriptions of embodiments of this application, unless otherwise specified, "a plurality of" means two or more. Other explicit and implicit definitions may also be included below.

An "embodiment" mentioned in this application means that a particular feature, structure, or feature described with reference to an embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in this application may be combined with another embodiment.

As described above, a general communication authentication mechanism is that user equipment (UE) completes IMS key allocation/identity authentication and key protocol (AKA) authentication in an IP multimedia subsystem (IMS) network registration process. A certificate and an identity used for authentication are a long-term key K and an IMS private identity (IMPI) stored in a SIM card. That is, an IMS network obtains a binding relationship between the IMPI (which may correspond to a phone number) and the card. Therefore, when one UE initiates a call to another UE, the network can only ensure, based on the binding relationship between the phone number and the card, that a number of the UE initiating a call cannot be forged. Therefore, the IMS network cannot ensure that a natural person identity cannot be forged. As a result, the IMS network cannot verify the natural person identity of the other party during a call.

In view of this, embodiments of this disclosure provide a targeted solution. In some example aspects, in the solutions of embodiments of this disclosure, the network side obtains biometric feature mark information (pre-registered, reported by a terminal, or obtained from an authority) of a user, and in a process of executing a service like a new call, the network side can determine authenticity of the user based on the obtained corresponding information.

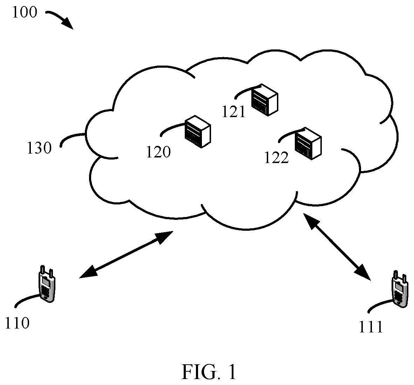

FIG. 1 is a diagram of an example environment in which a plurality of embodiments of this disclosure can be implemented. As shown in FIG. 1, the example environment includes a first terminal device 110, a second terminal device 111, a first network device 120, a second network device 121, and a third network device 122. The first network device 120, the second network device 121, and the third network device 122 are in a core network 130.

Specifically, the first network device 120, the second network device 121, and the third network device 122 may be identification information management network elements, control plane network elements, or media plane network elements. More specifically, the first network device 120, the second network device 121, and the third network device 122 may be application functions (Application Functions, AFs), and mainly transfer a requirement of an application side for a network side, for example, a quality of service (Quality of service, QoS) requirement or a user status event subscription. The AF may be a third-party functional entity or an application service deployed by an operator, for example, an IMS voice call service. When interacting with the core network, an application functional entity of a third-party application may further perform authorization processing through a network exposure function (Network Exposure Function, NEF). For example, the third-party application function directly sends a request message to the NEF, and the NEF determines whether the AF is allowed to send the request message. If the authentication succeeds, the request message is forwarded to a corresponding policy control function (Policy Control Function, PCF) or unified data management (Unified Data Management, UDM). Alternatively, the AF may be unified data management (Unified Data Management, UDM), and is mainly responsible for functions such as subscription data management and user access authorization. Alternatively, the AF may be a unified data repository (UDR), and is mainly responsible for an access function of data like subscription data, policy data, and application data. Alternatively, the AF may be a policy control function (Policy Control Function, PCF), and is mainly responsible for policy control functions such as charging, QoS bandwidth guarantee and mobility management, and UE policy decision for a session or a service stream level. Alternatively, the AF may be a session management function (Session Management Function, SMF), and is mainly responsible for functions such as session management, execution of a control policy delivered by the PCF, selection of a user plane function (User Plane Function, UPF) entity, and UE internet protocol address (IP) address allocation. Alternatively, the AF may be an access and mobility management function (Access and Mobility Management Function, AMF), which mainly handles functions such as mobility management and access authentication/authorization, and is further responsible for transferring a user policy between UE and the PCF. Alternatively, the AF may be a user plane function (User Plane Function, UPF) entity that serves as an interface to a data network, and performs functions such as user plane data forwarding, session/flow-level billing statistics, and a bandwidth limitation.

It may be understood that quantities of terminal devices and network devices shown in FIG. 1 are merely examples, and are not intended to impose any limitation. Based on an actual requirement, a communication network 100 may include any appropriate quantities of various types of network elements.

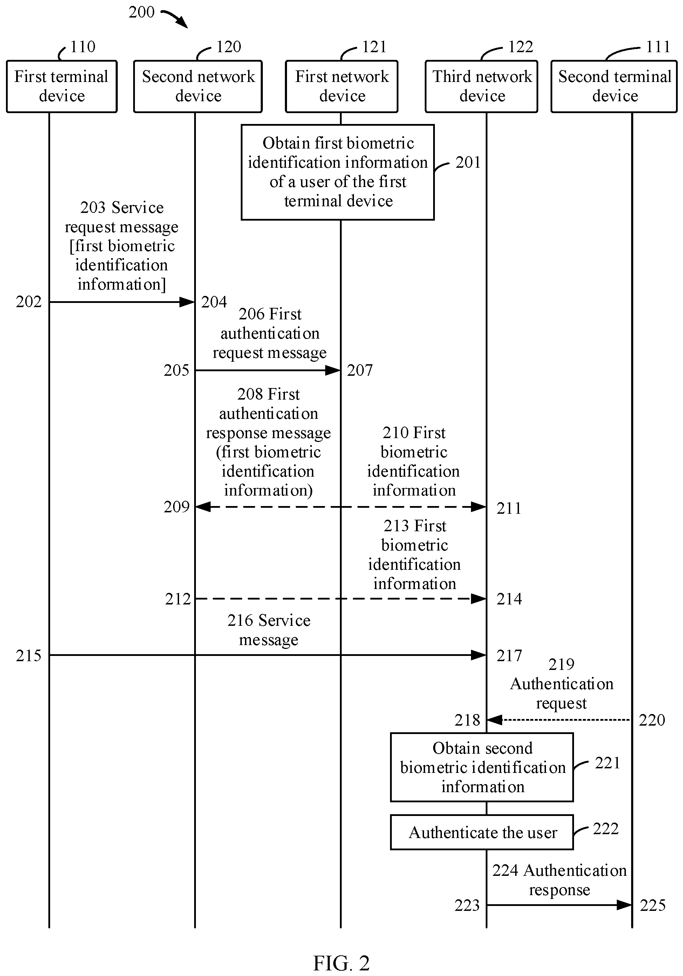

FIG. 2 is a diagram of a procedure according to some embodiments of this disclosure. As shown in FIG. 2, in some embodiments, in 201, a first network device 121 obtains first biometric identification information of a user of a first terminal device 110. 202: The first terminal device 110 sends a service request message 203 to a second network device, where the service request message optionally includes the first biometric identification information. 205: The second network device sends a first authentication request message 206 to the first network device 121. The first network device 121 sends a first authentication response message 208 to the second network device 120, where the first authentication response message 208 optionally includes the first biometric identification information. Alternatively, the first network device 121 sends the first biometric identification information 210 to a third network device 122. 212: The second network device 120 may alternatively send the first biometric identification information 213 to the third network device. 215: The first terminal device 110 sends a service message 216 to the third network device 122. The second network device 111 sends an authentication request 219 to the third network device 122. 221: The third network device 122 obtains second biometric identification information from the service message. 222: The third network device 122 authenticates the user based on the first biometric identification information and the second biometric identification information. 223: The third network device 122 sends an authentication response 224 to the second terminal device 111.

In the foregoing method, the first network device 121 obtains the biometric identification information, authenticates the user based on a corresponding authentication request message of the second network device 120, and sends the biometric identification information; and the third network device 122 obtains the second biometric identification information from the service message, and authenticates the user based on the first biometric identification information and the second biometric identification information. In this way, user biometric feature identification information can be obtained on a network side, and the network side can authenticate the user based on the obtained corresponding information during service execution.

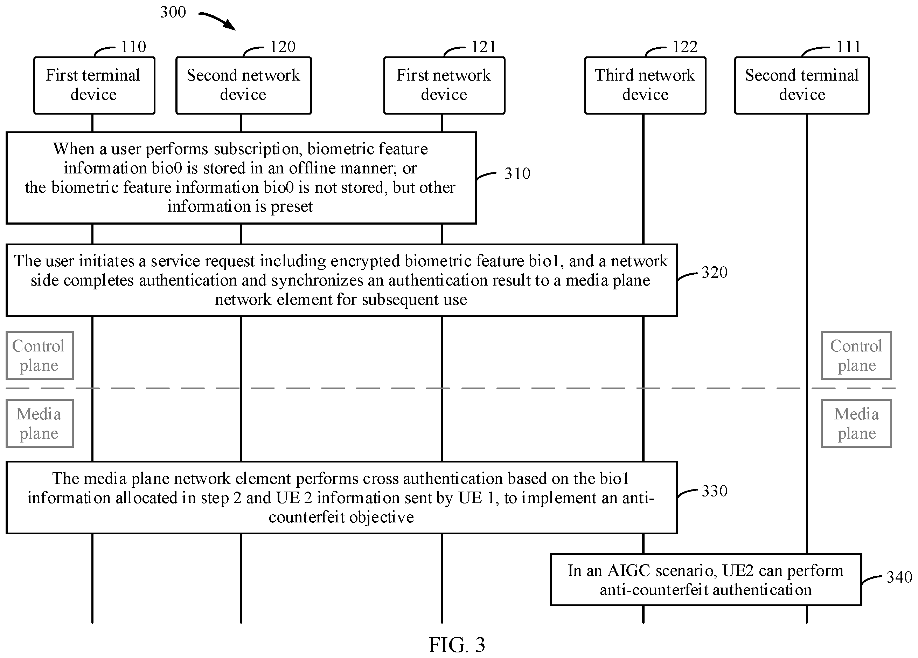

FIG. 3 is a general diagram of a user authentication procedure according to some embodiments of this disclosure. As shown in FIG. 3, in 310, a network side may store biometric feature information, namely, first biometric identification information (bio0), in an offline manner. For example, the biometric feature information is stored when a user performs subscription. Alternatively, the network side may not store the biometric feature information, and the biometric feature information is carried in a subsequent step. In addition, the network side may further interface with an external authority to obtain biometric feature information pre-stored by the user in the external authority. In 320, a service request of the user may carry a user biometric feature collected in real time, that is, second biometric identification information (bio1), to be compared with the pre-stored first biometric identification information (bio0); or when the network side does not have the first biometric identification information (bio0), the second biometric identification information (bio1) may be used as the first biometric identification information (bio0). In some embodiments, user biometric feature information is transmitted after being encrypted. The network side completes corresponding authentication and synchronizes an authentication result to a media plane network element 122 for subsequent use.

In 330, when a control plane completes negotiation, and a user plane/media plane actually transmits a user service stream/media stream, because the stream is an audio/video call, the stream carries biometric feature information, namely, third biometric identification information (bio2), the network side may compare the third biometric identification information (bio2) with the first biometric identification information (bio0) or the second biometric identification information (bio1) to perform anti-counterfeit authentication. In 340, in a new call scenario, a receiver second terminal device 111 may further initiate user anti-counterfeit authentication in a triggered manner.

In some embodiments, a first network device 121 is an identification information management network element, a second network device 120 is a control plane network element, and a third network device 122 is a media plane network element.

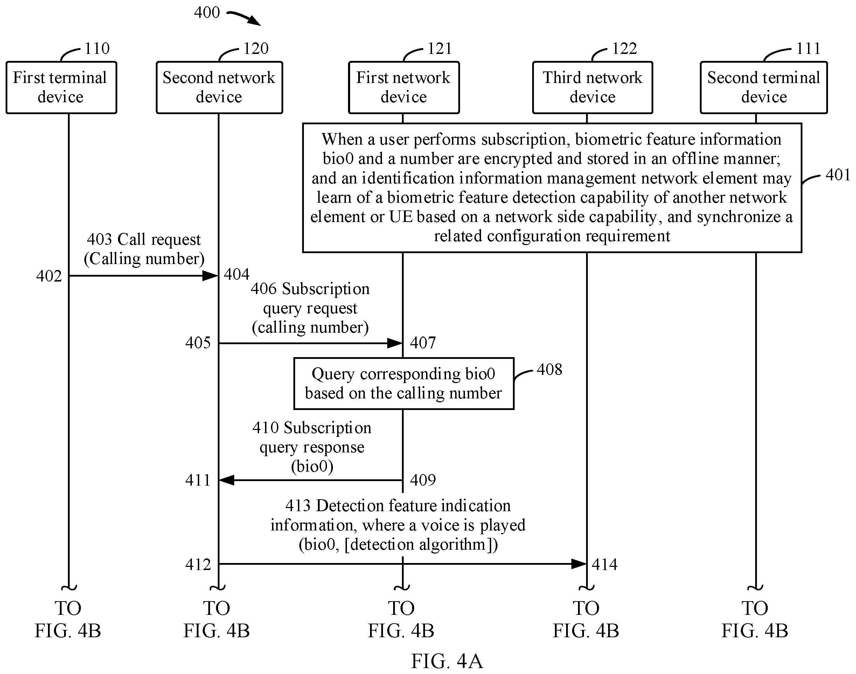

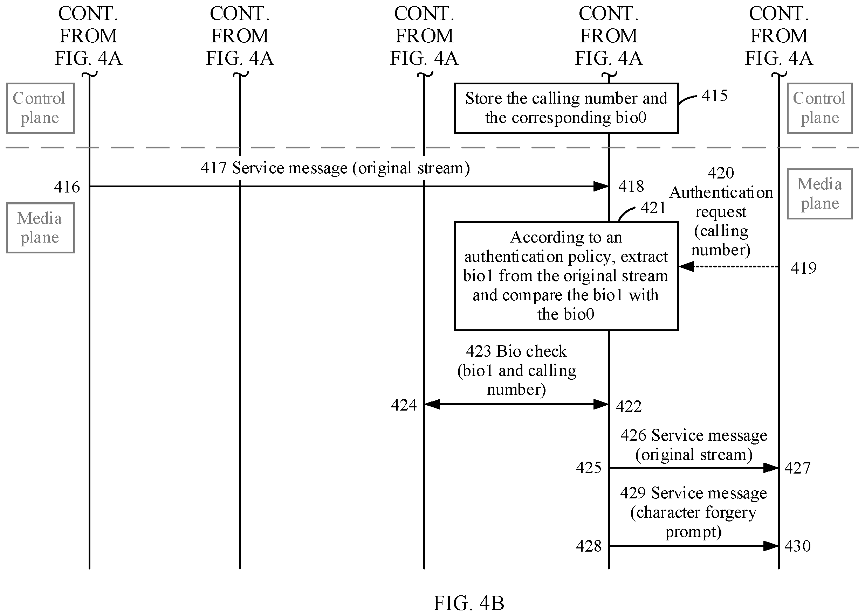

FIG. 4A and FIG. 4B are a diagram of a user authentication procedure based on preregistration and streaming media according to some embodiments of this disclosure. As shown in FIG. 4A, in 401, when a user performs subscription, biometric feature information of the user, namely, first biometric identification information (bio0) may be bound to a phone number in an offline manner to implement subscription. For example, digital biometric feature (face, voiceprint, fingerprint, iris, and the like) collection is performed in a telecommunication business office. A telecommunication operator may store subscription information in an identification information management network element in a core network in an out-of-band manner, for example, a home subscriber server or a UDM. In addition, an identification information management network element may learn of a biometric feature detection capability of a user of another network element or a terminal device based on a network side capability, and can synchronize a related detection capability configuration policy between different terminal devices and between network elements (network functions).

In some embodiments, in 402, a first terminal device 110 initiates a call request 403 to a network side, where the call request 403 carries a calling number of the user and a number of a called party. 404: A second network device 120 receives the call request 403 of the calling user. 405: The second network device 120 sends a subscription query request to a first network device 121 based on the calling number, to query user subscription information. 408: The first network device 121 queries, based on the calling number and the pre-stored information in 401, pre-stored biometric feature identification information of the calling party corresponding to the calling number, namely, the first biometric identification information (bio0). If the related information is found, the first biometric identification information (bio0) is carried in a returned subscription query response 410, otherwise, query error information is returned. The second network device 120 sends indication information 413 to a third network device 122 based on the received feature information and preconfigured or allocated media plane network element information, to indicate biometric feature information detected by the second network device 120. The information carries the first biometric identification information (bio0) obtained in the previous step and an authentication policy (the policy may also be preconfigured), and optionally carries a detection algorithm for the first biometric identification information (bio0), for example, a facial recognition algorithm or a voiceprint recognition algorithm. 415: The third network device 122 stores the calling number and the first biometric identification information (bio0) corresponding to the calling number.

In some embodiments, after control plane negotiation is completed, a user plane starts to transmit an audio/video stream. 416: The first terminal device 110 sends a service message 417 to the allocated third network device 122, where the service message 417 includes an original audio/video stream. 421: The third network device 122 authenticates the network side according to a preamble authentication policy. Specifically, the third network device 122 directly extracts the biometric feature information, namely, second biometric identification information (bio1) of the calling party based on a media stream in 417, and then compares the second biometric identification information (bio1) with the obtained first biometric identification information (bio0). 425: If the comparison succeeds, a service stream 426 is allowed to pass through to a second terminal device 111. Otherwise, the third network device 122 may directly reject the pass-through, or continue to allow a service stream 429 to pass through 428, but simultaneously prompts, in a video call interface, UE 2 that a character may be forged information.

In some embodiments, the second terminal device 111 is a terminal that supports a new call, and there is an interactive application/function/plug-in related to "verifying an identity of UE 1" on the terminal. Therefore, a user of the second terminal device 111 may tap the function when the user suspects a user identity mismatch on the first terminal device 110, and actively trigger validity check on the UE 1. In this case, the third network device 122 may still perform authentication according to a local policy, as described in step 421.

In addition, in 422, the third network device 122 may also send a check requirement 423 to the first network device 121 for check, where the check requirement 423 carries original stream information, or the second biometric identification information (bio1) extracted from the original stream, and a number of the first terminal device 110, and then send the check requirement 423 to the first network device 121, so that the first network device 121 completes authentication acknowledgment. 424: Then, a check result is returned to the third network device 122.

In some embodiments, the first network device 121 is an identification information management network element, the second network device 120 is a control plane network element, and the third network device 122 is a media plane network element.

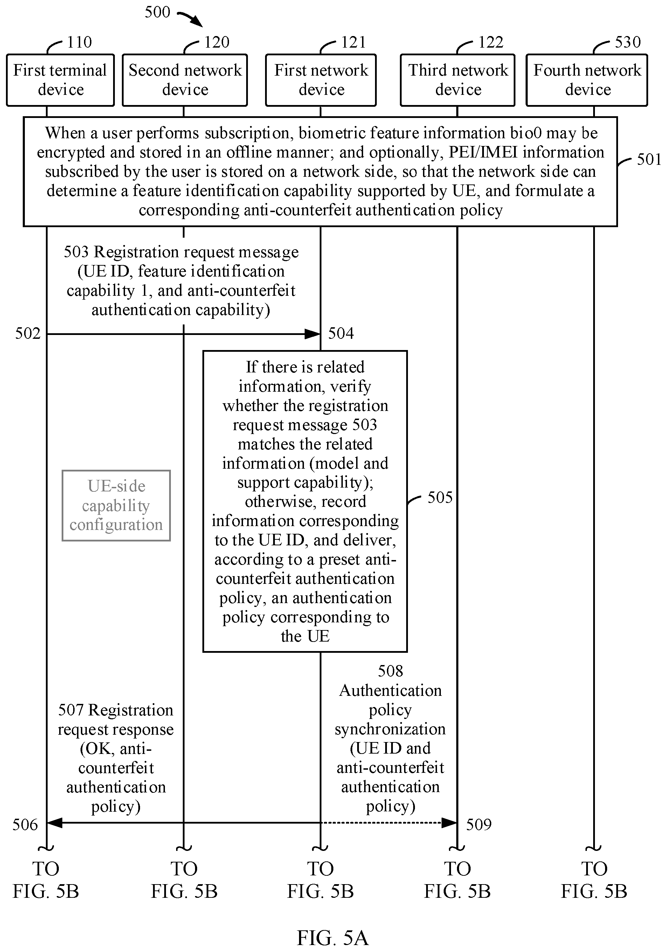

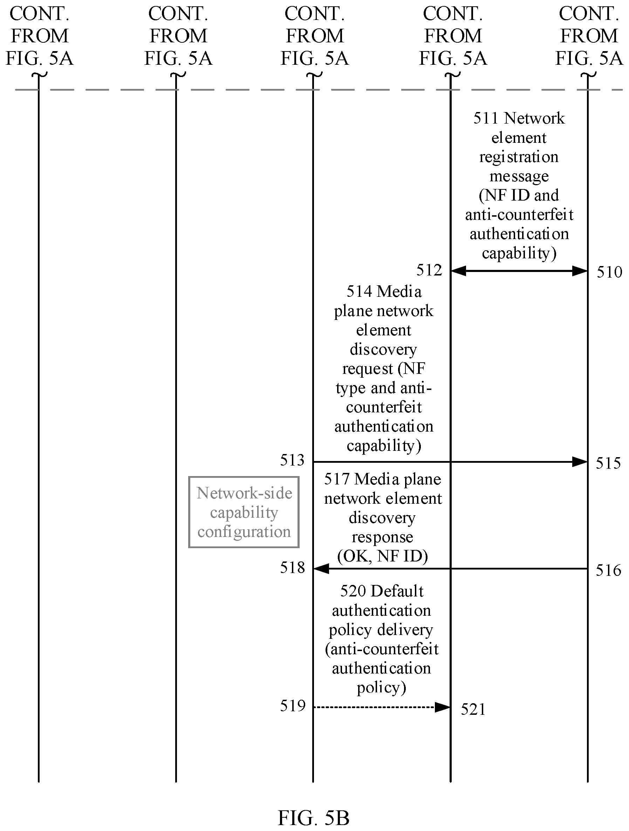

FIG. 5A and FIG. 5B are a diagram of an authentication capability configuration procedure in a configuration phase according to some embodiments of this disclosure. The embodiment shown in FIG. 5A and FIG. 5B details how to align biometric identifier detection capabilities between a terminal device and a network, and corresponds to a detection capability configuration policy related to synchronization between network element NFs shown in FIG. 4A and FIG. 4B.

As shown in FIG. 5A, in 501, when a user performs subscription, biometric feature information, namely, first biometric identification information (bio0), may be optionally encrypted and stored in an offline manner, and a permanent equipment identity/international mobile equipment identity Permanent Equipment Identifier/International Mobile Equipment Identity number information subscribed by the user is optionally stored on a network side. In this way, the network side can determine a feature identification capability supported by the terminal device, and formulate a corresponding anti-counterfeit authentication policy. The feature identification capability indicates one or more biometric feature recognition such as "fingerprint recognition, voiceprint recognition, facial recognition, and iris recognition" that are supported by the terminal device.

In some embodiments, a first network device receives a registration request message from a first terminal device, where the registration request message includes identification information of the first terminal device, feature identification capability information of the first terminal device, and/or anti-counterfeit authentication capability information of the first terminal device. In other words, the registration request message may carry both the feature identification capability information of the first terminal device and the anti-counterfeit authentication capability information of the first terminal device, or carry only one of the two.

In response to the fact that the first network device stores the feature identification capability information of the first terminal device and/or the anti-counterfeit authentication capability information of the first terminal device, whether the stored feature identification capability information and/or anti-counterfeit authentication capability information match/matches the feature identification capability information and the anti-counterfeit authentication capability information that are carried in the registration request message is verified; and a registration request response is sent to the first terminal device, where the registration request response includes an anti-counterfeit authentication policy corresponding to the first terminal device. Alternatively, in response to the fact that the first network device does not store the feature identification capability information of the first terminal device and/or the anti-counterfeit authentication capability information of the first terminal device that are/is recorded by the first network device, the identification information of the first terminal device, the feature identification capability information of the first terminal device, and/or the anti-counterfeit authentication capability information of the first terminal device that are/is carried in the registration request message are stored.

In addition, if the registration request message does not include the feature identification capability information of the first terminal device and/or the anti-counterfeit authentication capability information of the first terminal device, the registration request response includes a default anti-counterfeit authentication policy.

The anti-counterfeit authentication policy may be: authentication on the network side, authentication on a terminal side, authentication on both the network side and the terminal side, and/or non-authentication on either side (compatible with a legacy network and a legacy terminal). That is, the anti-counterfeit authentication policy is a combination of the foregoing four cases. For example, the anti-counterfeit authentication policy may be one of the foregoing four cases, or a combination of two of the foregoing four cases, or a combination of three of the foregoing four cases, or all the four cases.

As described above, the terminal device may carry a "feature identification capability" and/or an "anti-counterfeit authentication capability" in the registration request message. In this case, the network side may allocate different anti-counterfeit authentication policies to the terminal according to an overall anti-counterfeit authentication policy preconfigured by the network side. For example:
1. When the terminal reports both the "feature identification capability" and the "anti-counterfeit authentication capability", an anti-counterfeit authentication policy of the network for the terminal may be: authentication on the network side, authentication on the terminal side, authentication on both the network side and the terminal side, and non-authentication on either side, where authentication on the terminal side is focused on.
2. When the terminal reports only the "feature identification capability", an anti-counterfeit authentication policy of the network for the terminal may be: authentication on the network side, and non-authentication on either side. In this case, because the terminal cannot prove definite anti-counterfeit authentication capability information (for example, there is no new call subscription), authentication on the network side is focused on.
3. When the terminal reports only the "anti-counterfeit authentication capability", an anti-counterfeit authentication policy of the network for the terminal may be: authentication on the network side, authentication on both the network side and the terminal side, and non-authentication on either side, where authentication on the network side is focused on. The terminal side can initiate only an authentication request, and may not have hardware support (missing or damaged) for local authentication.
4. When the terminal does not report the "feature identification capability" and the "anti-counterfeit authentication capability", an anti-counterfeit authentication policy of the network for the terminal may be: authentication on the network side and non-authentication on either side, where non-authentication on either side is focused on.

Specifically, as shown in FIG. 5A, in 502, a first terminal device 110 sends a registration request message 503 to a first network device 121, where the registration request message 503 includes a terminal device ID, a feature identification capability, and an anti-counterfeit authentication capability (for example, whether the terminal can verify biometric information). In 505, if the first network device 121 has related information, the first network device 121 verifies whether the registration request message 503 matches the related information (a model and a support capability); otherwise, the first network device 121 records information corresponding to the terminal device ID, and delivers, according to a preset anti-counterfeit authentication policy, an authentication policy corresponding to the UE. The first network device 121 sends a registration request response 507 to the first terminal device 110, where the registration request response 507 includes an anti-counterfeit authentication policy. The first network device 121 sends an authentication policy synchronization message to the third network device 122, where the authentication policy synchronization message includes the terminal device ID and the anti-counterfeit authentication policy.

In some embodiments, the first network device 121 sends a media plane network device discovery request message to a fourth network device 530. The media plane network device discovery request message includes the anti-counterfeit authentication capability. In addition, the first network device 121 receives a media plane network device discovery response message from the fourth network device, and sends the anti-counterfeit authentication policy to the third network device.

Specifically, as shown in FIG. 5B, in 512, the third network device 122 sends a network element registration message 511 to the fourth network device 530, where the network element registration message 511 includes an NF ID and the anti-counterfeit authentication capability. 513: The first network device 121 sends a media plane network element discovery request 514 to the fourth network device 530, where the media plane network element discovery request 514 includes an NF type and the anti-counterfeit authentication capability. 516: The fourth network device 530 sends a media plane network element discovery response 517, where the media plane network element discovery response 517 includes the NF ID. 519: The first network device 121 sends a default authentication policy 520 to the third network device 122.

In some embodiments, the terminal-side anti-counterfeit authentication policy varies for different models. For example, for a mobile phone that does not support a new call function, only a network-side authentication mechanism may be used. For a mobile phone that supports a new call function, a new call interactive authentication function may be supported. In some embodiments, an anti-counterfeit authentication capability of the third network device 122 needs to be reported to the fourth network device 530 in a network element registration phase, and subsequently, UDM queries the fourth network device 530 for the anti-counterfeit authentication capability.

In some embodiments, the first network device 121 is an identification information management network element, the second network device 120 is a control plane network element, the third network device 122 is a media plane network element, and the fourth network device 530 is a network function management network element.

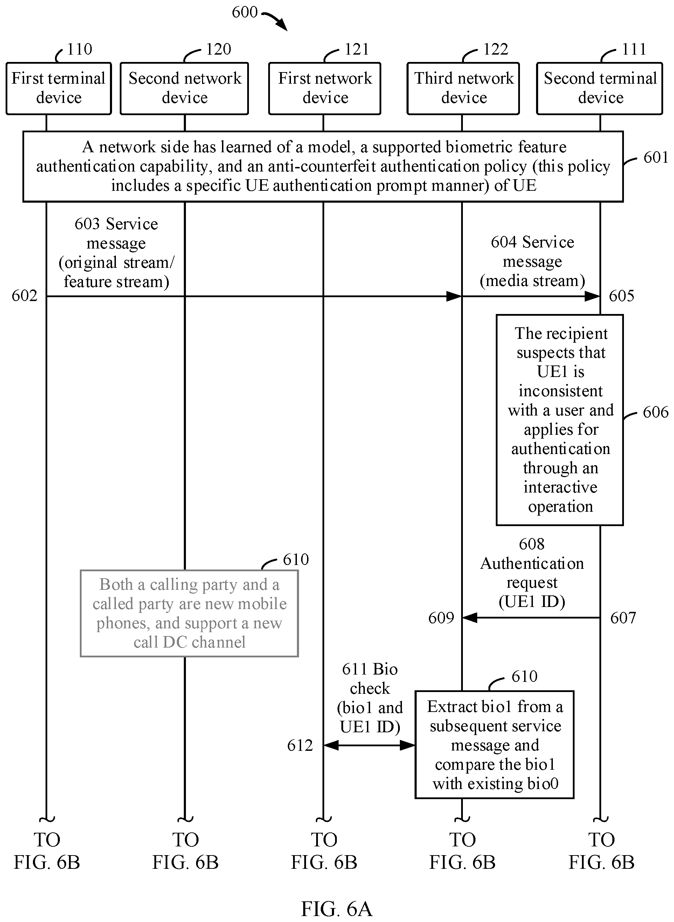

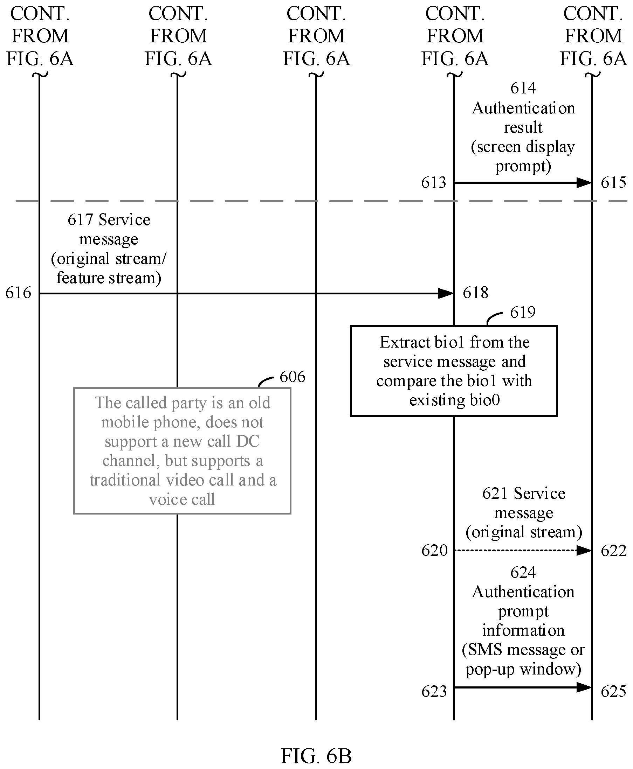

FIG. 6A and FIG. 6B are a diagram of an exception prompt procedure in service interaction according to some embodiments of this disclosure. The embodiment shown in FIG. 6A and FIG. 6B is refinement of a branch procedure finally described in the embodiment shown in FIG. 4A and FIG. 4B.

As shown in FIG. 6A, in 601, the network side has learned of a model, a supported biometric feature authentication capability, and an anti-counterfeit authentication policy (this policy includes a specific authentication prompt manner of a terminal device) of UE.

In some embodiments, when the terminal device side supports an interactive new call, an authentication request for a suspected calling party may be actively triggered, and an authentication result prompt (abnormal or normal) is implemented in various manners such as screen display, an SMS message, and a pop-up window. In this case, prompt information is uniformly configured according to the anti-counterfeit authentication policy in the embodiment shown in FIG. 5A and FIG. 5B. Specifically, as shown in FIG. 6A, in 602, a first terminal device 110 sends a service message 603 to a third network device 122. 602: The third network device 122 sends a service message 604 to a second terminal device 111. In 606, the receiver, namely, the second terminal device 111, suspects that the first terminal device is inconsistent with a user, and applies for authentication through an interactive operation. 607: The second terminal device 111 sends an authentication request 608 to the third network device 122, where the authentication request 608 includes an ID of the first terminal device. In 610, the third network device 122 extracts second biometric identification information (bio1) from a subsequent service message, and compares the second biometric identification information (bio1) with an existing first biometric identification information (bio0). In some embodiments, the third network device 122 may alternatively send bio check 611 to a first network device 121, where the bio check 611 includes the second biometric identification information (bio1) and the ID of the first terminal device. The first network device 121 returns a check result to the third network device 122. 613: The third network device 122 sends an authentication result 614 (for example, a screen prompt) to the second terminal device 111.

In some embodiments, when the terminal device side does not support an interactive new call, anti-counterfeit authentication may be performed in advance through only the network side. When the authentication fails, the service information may be transmitted as usual, but a user is reminded of an exception through an SMS message or a pop-up window. In addition, the service message may not be directly transmitted, but an authentication exception message is directly prompted. Specifically, as shown in FIG. 6B, in 616, the first terminal device 110 sends a service message 617 to the third network device 122, where the service message 617 includes an original stream/a feature stream. In 619, the third network device 122 extracts the second biometric identification information (bio1) from the service message, and compares the second biometric identification information with the existing first biometric identification information (bio0). When the authentication succeeds, the third network device 122 sends a service message 621 to the second terminal device 111, where the service message 621 includes the original stream. When the authentication fails, an authentication prompt message 624 (for example, an SMS message or a pop-up window) is sent to the second terminal device 111.

In some embodiments, the first network device 121 is an identification information management network element, the second network device 120 is a control plane network element, and the third network device 122 is a media plane network element.

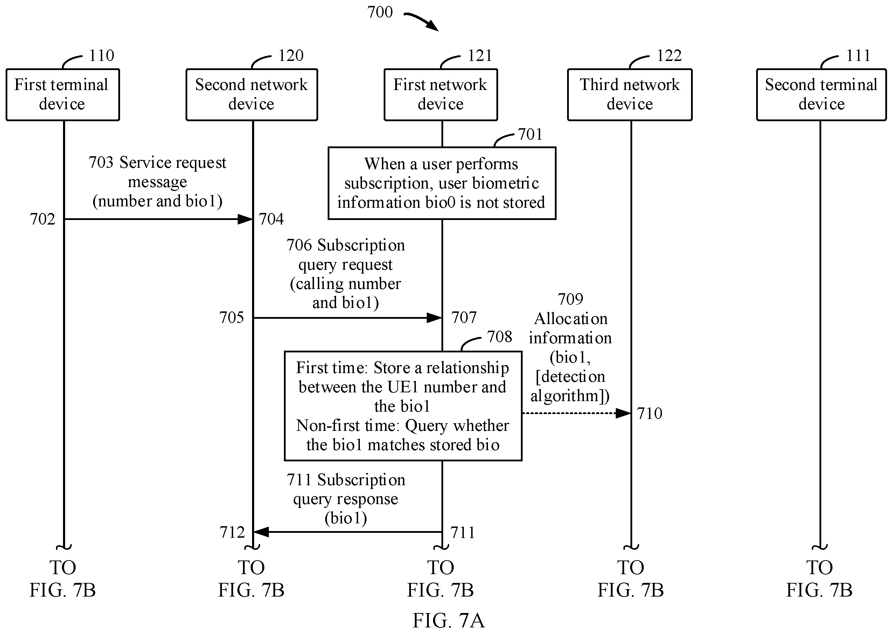

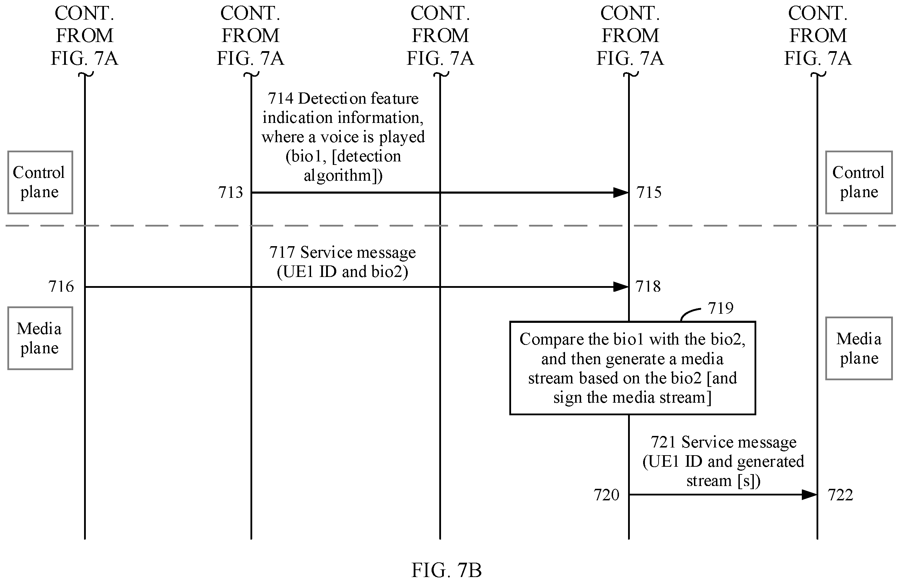

FIG. 7A and FIG. 7B are a diagram of a procedure of reporting biometric identification information by a terminal according to some embodiments of this disclosure. A difference between the embodiment shown in FIG. 7A and FIG. 7B and the embodiment shown in FIG. 4A and FIG. 4B lies in that the scenario shown in FIG. 7A and FIG. 7B is applicable to a case in which the terminal device expects high-intensity privacy. Both second biometric identification information (bio1) and third biometric identification information (bio2) are encrypted, and are incomplete. In this scenario, it can be ensured that a user that initiates a service is consistent with a user that executes the service, but it cannot be ensured that the user is a user who performs subscription. Therefore, an identification information management network element stores second biometric identification information (bio1) obtained for the first time.

As shown in FIG. 7A, in 701, when the user performs subscription, biometric information of the user, namely, first biometric identification information (bio0) is not stored. 702: A first terminal device 110 sends a service request message 703 to a second network device 120, where the service request message 703 includes a number of the user of the first terminal device 110 and the second biometric identification information (bio1). 705: The second network device 120 sends a subscription query request 706 to a first network device 121, where the subscription query request 706 includes the number and the second biometric identification information (bio1). In 708, if the subscription query request is an initial subscription query request, a relationship between the number of the first terminal device 110 and the second biometric identification information (bio1) is stored. If the subscription query request is not an initial subscription query request, whether the second biometric identification information (bio1) in the message matches stored bio is queried. Optionally, the first network device sends allocation information 709 to a third network device 122, where the allocation information 709 includes the second biometric identification information (bio1) and optionally includes a corresponding detection algorithm.

In some embodiments, in 711, the first network device 121 sends a subscription query response 711 to the second network device 120, where the subscription query response 711 includes the second biometric identification information (bio1). The second network device 120 sends indication detection information 714 to the third network device 122, where the indication detection information 714 includes the second biometric identification information (bio1) and optionally includes a detection algorithm.

In some embodiments, in 716, the first terminal device 110 sends a service message 717 to the third network device 122, where the service message 717 includes an ID of the first terminal device and the third biometric identification information (bio2). In 719, the third network device 122 compares the second biometric identification information (bio1) with the third biometric identification information (bio2), and then generates a media stream and optionally a signature based on the third biometric identification information (bio2) after the comparison succeeds. 720: The third network device 122 sends a service message 721 to a second terminal device 111, where the service message 721 includes the ID of the first terminal device and the generated media stream.

In some embodiments, the first network device 121 is an identification information management network element, the second network device 120 is a control plane network element, and the third network device 122 is a media plane network element.

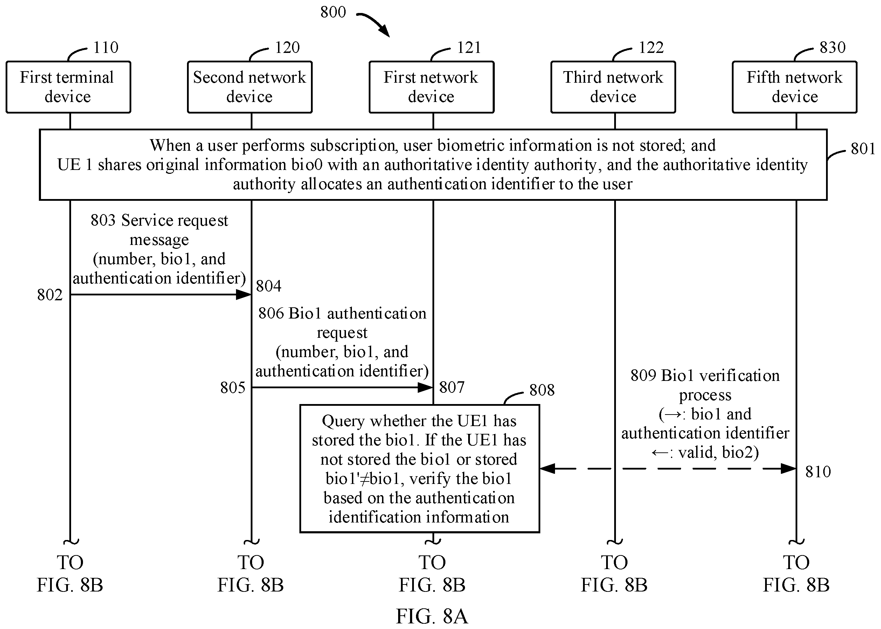

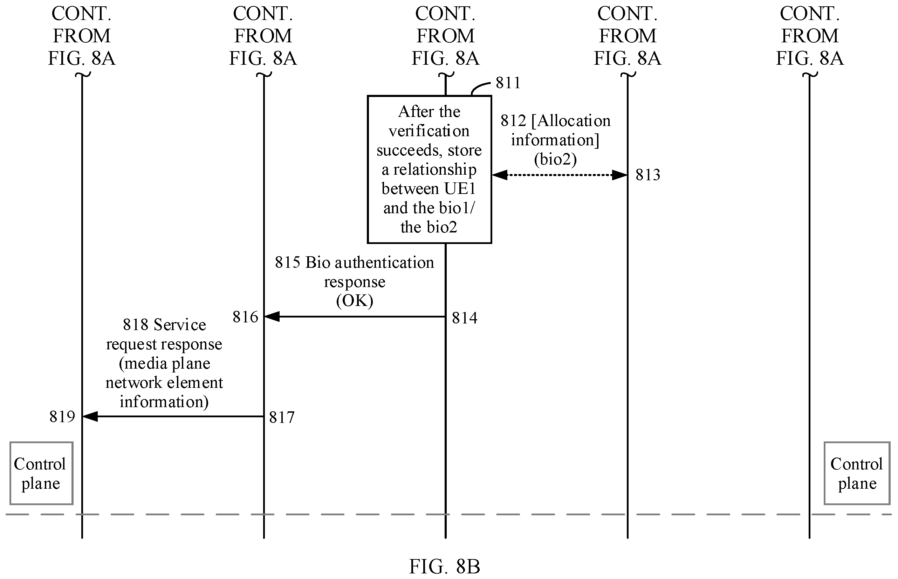

FIG. 8A and FIG. 8B are a diagram of a procedure of obtaining biometric identification information through an authority according to some embodiments of this disclosure. The embodiment shown in FIG. 8A and FIG. 8B is another branch case of the control plane in the embodiment shown in FIG. 4A and FIG. 4B, and a specific difference lies in that a fifth network device 830 is included in the embodiment shown in FIG. 8A and FIG. 8B. In some embodiments, the fifth network device 830 may serve as authoritative identity authentication, and may be internal or external to the network.

In some embodiments, a first authentication request message includes a subscriber identification number identifier of a first terminal device, second biometric identification information that is of a user and that is collected by the first terminal device, and an authentication identifier. In response to the fact that a first network device 121 does not store the second biometric identification information or stored biometric identification information does not match the second biometric identification information, the second biometric identification information is verified based on communication with the fifth network device. That the second biometric identification information is verified based on communication with the fifth network device includes: sending an authentication identifier to the fifth network device, and when the authentication at the fifth network device succeeds, receiving third biometric identification information corresponding to the second biometric identification information, storing a relationship between the first terminal device and the second biometric identification information and a relationship between the first terminal device and the third biometric identification information, and sending authentication response information to a second network device. In some embodiments, the second biometric identification information and the third biometric identification information are sent after being encrypted.

Specifically, as shown in FIG. 8A, in 801, when the user performs subscription, user biometric information of the first terminal device is not stored; and the first terminal device shares original information, that is, first biometric identification information (bio0) with an authoritative identity authority, and the authoritative identity authority allocates an authentication identifier to the user. 802: The first terminal device 110 sends a service request message 803 to the second network device 120, where the service request message 803 includes a number of the first terminal device, the second biometric identification information (bio1), and the authentication identifier. The second network device 120 sends a second biometric identification information (bio1) authentication request 805 to the first network device 121, where the second biometric identification information (bio1) authentication request 805 includes the number of the first terminal device, the second biometric identification information (bio1), and the authentication identifier. In 808, the first network device 121 queries whether the first terminal device has stored the second biometric identification information (bio1). If the first terminal device does not store the second biometric identification information (bio1), or stored second biometric identification information (bio1)'≠the second biometric identification information (bio1), the second biometric identification information (bio1) needs to be verified based on authentication identification information. The first network device 121 sends verification information 809 of the second biometric identification information (bio1) to the fifth network device 830. In some embodiments, the verification information may include only the authentication identifier, and the fifth network device 830 returns the third biometric identification information (bio2). Alternatively, the verification information may be used to send both the second biometric identification information (bio1) and the authentication identifier, and the fifth network device needs to return only a result indicating whether the second biometric identification information is valid.

In some embodiments, the third biometric identification information (bio2) is a desensitized biometric identification feature, and may be a biometric feature specially used to generate a digital human image (but real biometric feature information of the user may not be reversely deduced), or may be directly a generated digital human image.

In some embodiments, in 811, after the verification succeeds, the first network device 121 stores a relationship between the first terminal device 110 and the second biometric identification information (bio1)/the third biometric identification information (bio2). Optionally, the first network device 121 sends allocation information 812 to the third network device 122, where the allocation information 812 includes the third biometric identification information (bio2). The first network device 121 sends a bio authentication response 815 to the second network device 120. The second network device 120 sends a service request response 818 to the first terminal device 110, where the service request response 818 includes media plane network element information.

In some embodiments, the first network device 121 is an identification information management network element, the second network device 120 is a control plane network element, and the third network device 122 is a media plane network element.

According to the foregoing embodiments, in the technical solutions of this application, anti-counterfeit authentication on a real user and a digital human image of the real user is implemented on the network side and the terminal side with reference to biometric identification information in a service procedure. In addition, biometric identification information may be encrypted and transmitted in a channel, so that no privacy leakage problem is caused. Specifically, the identification information management network element may implement authentication (preconfigured, obtained from an authority, or reported by a terminal) and storage of the user biometric identification information, that is, the second biometric identification information (bio1), and deliver the encrypted second biometric identification information (bio1) to the media plane network element; or may assist in completing authentication, and comprehensively configure and manage anti-counterfeit authentication policies for the terminal device and the NF. The control plane network element may initiate a second biometric identification information (bio1) authentication request. The media plane network element may verify, based on the second biometric identification information (bio1) delivered by the subscription information network element and the extracted third biometric identification information (bio2), whether the UE 1 is a real user, and may further perform initial message authentication according to a policy. Authentication is performed continuously in real time, and the UE 2 triggers authentication. The media plane network element may further generate a secure and reliable digital human image based on the third biometric identification information (bio2), and provide an authentication capability. A terminal device that initiates a call may provide encrypted biometric information, namely, the second biometric identification information (bio1), to implement an anti-counterfeit objective. A called terminal device may actively verify whether the generated digital human image is valid, and actively trigger an authentication procedure based on a capability of the called terminal device, or may receive authentication information from the network side. The terminal device may further receive an anti-counterfeit authentication policy configured by the network side.

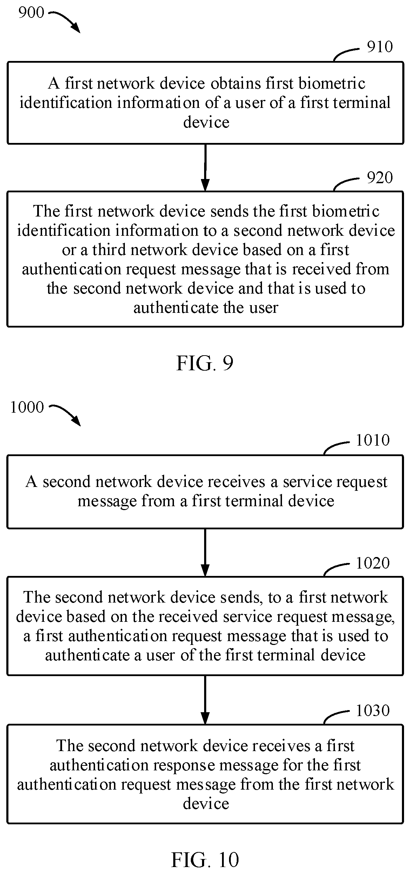

FIG. 9 is a block diagram of a method performed by a first network device according to some embodiments of this disclosure. In a block 910, a first network device obtains first biometric identification information of a user of a first terminal device. In a block 920, the first network device sends the first biometric identification information to a second network device or a third network device based on a first authentication request message that is received from the second network device and that is used to authenticate the user. In this way, user authentication can be implemented on the network side.

In some embodiments, the method further includes: determining that the first network device does not store the first biometric identification information, where that the first network device obtains the first biometric identification information of the user of the first terminal device includes: receiving, from the second network device, the first authentication request message that is used to authenticate the user, where the authentication request message carries the first biometric identification information; and storing the first biometric identification information. Therefore, when there is no first biometric identification information, the biometric identification information may be obtained from the user equipment. This improves flexibility of obtaining the biometric identification information.

In some embodiments, the method further includes: determining that the first network device stores the first biometric identification information; and that the first network device obtains the first biometric identification information of the user of the first terminal device includes: obtaining the first biometric identification information of the user of the first terminal device from the stored first biometric identification information. Therefore, the stored biometric identification information can be used in an authentication process.

In some embodiments, the first authentication request message includes an identifier of the first terminal device, second biometric identification information that is of the user and that is collected by the first terminal device, and an authentication identifier. The method further includes: in response to the fact that the first network device does not store the second biometric identification information or stored biometric identification information does not match the second biometric identification information, verifying the second biometric identification information via a fifth network device. Therefore, the biometric identification information may be verified through the third party. This improves authentication flexibility.

In some embodiments, verifying the second biometric identification information via the fifth network device includes: sending the authentication identifier to the fifth network device, where the authentication identifier is used to verify the second biometric identification information; when authentication succeeds at the fifth network device, receiving third biometric identification information corresponding to the second biometric identification information; storing a relationship between the first terminal device and the second biometric identification information and a relationship between the first terminal device and the third biometric identification information; and sending authentication response information to the second network device. Therefore, the biometric identification information may be verified and sent through the third party. This improves flexibility.

In some embodiments, the second biometric identification information and the third biometric identification information are sent after being encrypted. In this way, user privacy can be protected.

In some embodiments, verifying the second biometric identification information via the fifth network device includes: sending the second biometric identification information and the authentication identifier to the fifth network device, where the authentication identifier is used to verify the second biometric identification information; receiving an authentication result from the fifth network device; and sending the authentication response information to the second network device. Therefore, the biometric identification information may be verified through the third party. This improves flexibility.

In some embodiments, the method further includes: receiving a registration request message from the first terminal device, where the registration request message includes identification information of the first terminal device, feature identification capability information of the first terminal device, and/or anti-counterfeit authentication capability information of the first terminal device; in response to the fact that the first network device stores the feature identification capability information of the first terminal device and/or the anti-counterfeit authentication capability information of the first terminal device, verifying whether the stored feature identification capability information and/or stored anti-counterfeit authentication capability information match the feature identification capability information and/or the anti-counterfeit authentication capability information that are/is carried in the registration request message; and sending a registration request response to the first terminal device, where the registration request response includes an anti-counterfeit authentication policy corresponding to the first terminal device. Therefore, the anti-counterfeit authentication policy may be determined in a registration request phase, to accurately determine an authentication manner.

In some embodiments, the method further includes: receiving a registration request message from the first terminal device, where the registration request message includes identification information of the first terminal device, feature identification capability information of the first terminal device, and/or anti-counterfeit authentication capability information of the first terminal device; in response to the fact that the first network device does not store the feature identification capability information of the first terminal device and/or the anti-counterfeit authentication capability information of the first terminal device that are/is recorded by the first network device, storing the identification information of the first terminal device, the feature identification capability information of the first terminal device, and/or the anti-counterfeit authentication capability information of the first terminal device that are/is carried in the registration request message; and sending a registration request response to the first terminal device, where the registration request response includes an anti-counterfeit authentication policy corresponding to the first terminal device. Therefore, the authentication capability information may be stored and the anti-counterfeit authentication policy may be determined in a registration request phase, to accurately determine an authentication manner.

In some embodiments, the method further includes: receiving a registration request message from the first terminal device, where the registration request message does not include feature identification capability information of the first terminal device and/or anti-counterfeit authentication capability information of the first terminal device; and sending a registration request response to the first terminal device, where the registration request response includes a default anti-counterfeit authentication policy. Therefore, the default authentication policy may be sent to the terminal, to ensure that the terminal obtains the anti-counterfeit authentication policy.

In some embodiments, the method further includes: sending an authentication policy synchronization message to the third network device, where the authentication policy synchronization message includes the anti-counterfeit authentication policy. Therefore, the anti-counterfeit authentication policy may be sent to the third network device, to distribute the anti-counterfeit authentication policy.

In some embodiments, the method further includes: sending a media plane network device discovery request message to a fourth network device, where the media plane network device discovery request message includes an anti-counterfeit authentication capability; receiving a media plane network device discovery response message from the fourth network device; and sending the anti-counterfeit authentication policy to the third network device. In this way, the anti-counterfeit authentication policy can be registered.

In some embodiments, the anti-counterfeit authentication policy is associated with a function supported by the first terminal device, and the anti-counterfeit authentication policy includes: authentication on the network side, authentication on the terminal side, authentication on both the network side and the terminal side, and/or non-authentication on either the network side or the terminal side. Therefore, a plurality of authentication manners may be implemented.

In some embodiments, the first authentication request message includes the identifier of the first terminal device, and the method further includes: querying the stored first biometric identification information based on the identifier of the first terminal device. Therefore, the biometric identification information may be queried based on the terminal device identifier.

In some embodiments, the method further includes: receiving a second authentication request message from the third network device, where the second authentication request message includes original information of service information or the second biometric identification information obtained from the original information and an identifier of the user of the first terminal device that is used to verify the second biometric identification information; and sending an authentication response to the third network device. Therefore, the biometric identification information can be verified in a service process. This improves security.

FIG. 10 is a block diagram of a method performed by a second network device according to some embodiments of this disclosure. In a block 1010, the second network device receives a service request message from a first terminal device. In a block 1020, the second network device sends, to a first network device based on the received service request message, a first authentication request message that is used to authenticate a user of the first terminal device. In a block 1030, the second network device receives a first authentication response message for the first authentication request message from the first network device. In this way, the second network device may process a corresponding message for user authentication.

In some embodiments, the first authentication response message includes first biometric identification information of the user of the first terminal device, and the method further includes: sending the first biometric identification information and/or a detection algorithm to a third network device, where the first biometric identification information is used to authenticate the user of the first terminal device. Therefore, a biometric identifier and the detection algorithm may be sent to the third network device, to implement authentication flexibility.

In some embodiments, the first authentication request message and the first authentication response message include collected second biometric identification information, and the method further includes: sending the second biometric identification information to the third network device, where the second biometric identification information is used to authenticate the user of the first terminal device. Therefore, the biometric identifier may be sent to the third network device.

In some embodiments, the first authentication request message includes the collected second biometric identification information and an authentication identifier. Therefore, the authentication request message may carry the corresponding biometric identifier and the authentication identifier.

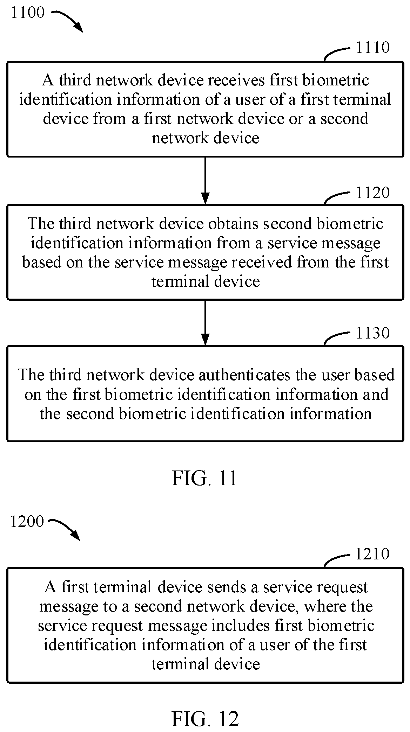

FIG. 11 is a block diagram of a method performed by a third network device according to some embodiments of this disclosure. In a block 1110, the third network device receives first biometric identification information of a user of a first terminal device from a first network device or a second network device. In a block 1120, the third network device obtains second biometric identification information from a service message based on the service message received from the first terminal device. In a block 1130, the third network device authenticates the user based on the first biometric identification information and the second biometric identification information. In this way, the user can be authenticated based on the biometric identification information.

In some embodiments, the method further includes: storing an identifier of the first terminal device and the first biometric identification information. Therefore, the network device stores corresponding information.

In some embodiments, the method further includes: sending a second authentication request message to the first network device, where the second authentication request message includes original information of the service message or the second biometric identification information and an identifier of the user of the first terminal device; and receiving a second authentication response message for a second authentication request from the first network device. Therefore, the user may be authenticated via the first network device.

In some embodiments, the method further includes: in response to a failure of the authentication, sending, to a second terminal device, authentication prompt information indicating that the authentication on the user fails. In this way, the user can receive the prompt information.

In some embodiments, the method further includes: receiving an anti-counterfeit authentication policy for the first terminal device from the first network device. In this way, the anti-counterfeit authentication policy can be received, and the anti-counterfeit authentication policy can be distributed.

In some embodiments, the method further includes: in response to success of the authentication, generating a media stream based on the second biometric identification information and signing the media stream; and sending the media stream and the signature to the second terminal device. In this way, the media stream can be signed, to improve security.

In some embodiments, the method further includes: receiving third biometric identification information from the first network device, where the third biometric identification information is provided by a fifth network device and corresponds to the second biometric identification information. Therefore, the biometric identification information may be obtained through a third party.

FIG. 12 is a block diagram of a method performed by a first terminal device according to some embodiments of this disclosure. In a block 1210, the first terminal device sends a service request message to a second network device, where the service request message includes first biometric identification information of a user of the first terminal device. In this way, the terminal sends the biometric identification information.

In some embodiments, the method further includes: sending a registration request message to the second network device, where the registration request message includes identification information of the first terminal device, feature identification capability information of the first terminal device, and anti-counterfeit authentication capability information of the first terminal device; and receiving a registration request response from the first network device, where the registration request response includes an anti-counterfeit authentication policy corresponding to the first terminal device. In this way, the terminal obtains the anti-counterfeit authentication policy.

In some embodiments, the service request message includes an identifier of the first terminal device, second biometric identification information that is of the user and that is collected by the first terminal device, and an authentication identifier. In this way, the collected identification information and the authentication identifier are sent through a message.

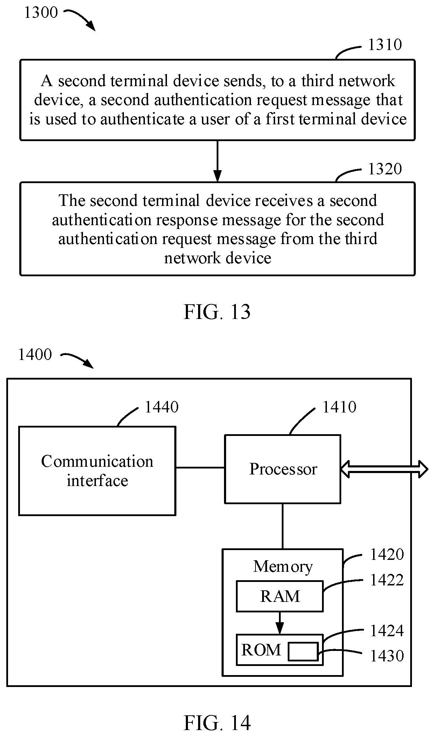

FIG. 13 is a block diagram of a method performed by a second terminal device according to some embodiments of this disclosure. In a block 1310, the second terminal device sends, to a third network device, a second authentication request message that is used to authenticate a user of a first terminal device. In a block 1320, the second terminal device receives a second authentication response message for the second authentication request message from the third network device. Therefore, an authentication result may be received.

In some embodiments, the method further includes: receiving authentication prompt information from the third network device, where the authentication prompt information indicates that authentication on the user fails. In this way, corresponding authentication prompt information may be received.

FIG. 14 is a block diagram of an electronic device 1400 that can implement a plurality of embodiments of this disclosure. The device 1400 may be configured to implement the first terminal device 110, the second terminal device 111, the first network device 120, the second network device 121, and the third network device 122 shown in FIG. 1. As shown in FIG. 14, the device 1400 includes one or more processors (or processing units) 1410, may further include one or more memories 1420 coupled to the processor 1410, and may further include a communication interface 1440 coupled to the processor 1410.

The communication interface 1440 may be configured to communicate with another device or apparatus, for example, send or receive data and/or a signal. The communication interface 1440 may have at least one communication interface for communication. The communication interface may include any interface necessary for communicating with another device. For example, the communication interface may be a transceiver, a circuit, a bus, a module, or another type of communication interface.

The processor 1410 may include but is not limited to at least one of the following: one or more of a general-purpose computer, a dedicated computer, a microcontroller, a digital signal controller (Digital Signal Processor, DSP), or a controller-based multi-core controller architecture. The device 1400 may have a plurality of processors, such as an application-specific integrated circuit chip, which in time belongs to a clock synchronized with a main processor.

The memory 1420 may include one or more non-volatile memories and one or more volatile memories. Examples of the non-volatile memory include but are not limited to at least one of the following: a read-only memory (Read-Only-Memory, ROM) 1424, an erasable programmable read-only memory (Electrically Programmable Read-Only-Memory, EPROM), a flash memory, a hard disk, a compact disc (Compact Disc, CD), a digital video disk (Digital Video Disk, DVD), or other magnetic storage and/or optical storage. Examples of the volatile memory include but are not limited to at least one of the following: a random access memory (Random Access Memory, RAM) 1422, or another volatile memory that does not persist for duration of a power failure.

A computer program 1430 includes computer-executable instructions executed by an associated processor 1410. The program 1430 may be stored in the ROM 1420. The processor 1410 may perform any proper action and processing by loading the program 1430 into the RAM 1420.

The possible implementations of this application may be implemented using the program 1430, so that the device 1400 can perform any process discussed with reference to FIG. 2 to FIG. 12. A possible implementation of this application may alternatively be implemented by hardware or a combination of software and hardware.

In some implementations, the program 1430 may be tangibly included in a computer-readable medium, and the computer-readable medium may be included in the device 1400 (for example, in the memory 1420) or another storage device that can be accessed by the device 1400. The program 1430 may be loaded from the computer-readable medium into the RAM 1422 for execution. The computer-readable medium may include any type of tangible non-volatile memory, for example, a ROM, an EPROM, a flash memory, a hard disk, a CD, or a DVD.

It should be noted that the foregoing embodiments are some implementations provided in this application, and are merely intended to describe the technical solutions of this application more clearly, but do not constitute a limitation on another embodiment of this application. In another embodiment, more or fewer procedures or steps, more or fewer components, more or fewer service functions, different scheduling policies, and the like may be further included. This is not limited herein. A person of ordinary skill in the art may learn that with evolution of a network architecture and emergence of a new service scenario, the technical solutions provided in this application are also applicable to resolving a similar technical problem.

An embodiment of this application further provides a chip. The chip may include an input interface, an output interface, and a processing circuit. In this embodiment of this disclosure, the input interface and the output interface may complete signaling or data interaction, and the processing circuit may complete generation and processing of signaling or data information.

An embodiment of this application further provides a chip system, including a processor, configured to support a computing device in implementing the function in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete device.

An embodiment of this application further provides a processor, configured to be coupled to a memory. The memory stores instructions. When the processor runs the instructions, the processor is enabled to perform the method and the function in any one of the foregoing embodiments.

An embodiment of this application further provides a computer-readable storage medium. The computer-readable storage medium stores computer instructions or program code. When a processor runs the instructions or the program code, the processor is enabled to perform the method and the function in any one of the foregoing embodiments. The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. The computer-readable storage medium may be any usable medium accessible by a computer, or a data storage device, like a server or a data center, integrating one or more usable media. More detailed examples of the computer-readable storage medium include an electrical connection with one or more wires, a magnetic medium (for example, a magnetic disk, a floppy disk, a hard disk, a magnetic tape, or a magnetic storage device), an optical medium (for example, an optical storage device or a DVD), a semiconductor medium (for example, a solid state drive), a random access memory (RAM), a read-only memory (ROM), an erasable programmable read-only memory (EPROM or flash memory), or any suitable combination thereof.

All or some of the foregoing embodiments may be implemented by using software, hardware, firmware, or any combination thereof. When software is used to implement the embodiments, all or a part of the embodiments may be implemented in a form of a computer program product. An embodiment of this application further provides at least one computer program product that is tangibly stored on a non-transitory computer-readable storage medium. The computer program product includes one or more computer-executable instructions, for example, instructions included in a program module, and the instructions are executed in a device on a target real or virtual processor, to perform the process, the method, and the function in any one of the foregoing embodiments. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner.

According to the methods provided in embodiments of this application, this application further provides a computer program product. The computer program product includes computer program code. When the computer program code is run on a computer, the computer is enabled to perform a process, a method, and a function in the foregoing embodiments. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions for the program module may be executed locally or in a distributed device. In the distributed device, the program module may be locally located and located in a remote storage medium.

Computer program code for implementing the method disclosed in this disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, executed partially on a computer, executed as a standalone software package, executed partially on a computer and partially on a remote computer, or executed entirely on a remote computer or a server. In the context of this disclosure, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

Usually, various embodiments of this application may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects of embodiments of this disclosure are shown and described as block diagrams, flowcharts, or some other figures, it should be understood that the blocks, apparatuses, systems, techniques, or methods described in this specification may be implemented as, for example, non-limiting examples, hardware, software, firmware, dedicated circuits or logic, general-purpose hardware, controllers, other computing devices, or a combination thereof.

The foregoing has described various implementations of this disclosure. The foregoing descriptions are examples, are not exhaustive, and are not limited to the disclosed implementations. Many modifications and changes are clear to a person of ordinary skill in the art without departing from the scope and spirit of the described implementations. Selection of the terms used in this specification is intended to well explain principles of the implementations, actual applications, or improvements to technologies in the market, or to enable another person of ordinary skill in the art to understand the implementations disclosed in this specification.

In the foregoing specific implementations, the objectives, the technical solutions, and the benefits of embodiments of this application are further described in detail. It should be understood that the foregoing descriptions are merely specific implementations of embodiments of this application, but are not intended to limit the protection scope of embodiments of this application. Any modification, equivalent replacement, or improvement made based on the technical solutions in embodiments of this application shall fall within the protection scope of embodiments of this application.

It should be noted that although the foregoing describes embodiments of this application with reference to the accompanying drawings, the foregoing embodiments are not independent of each other, and may also be combined to obtain another embodiment. Division of manners, cases, categories, and embodiments in embodiments of this application is merely for ease of description, and shall not constitute a special limitation. Various manners, categories, cases, and features in embodiments may be combined with each other provided that they comply with logic. The implementations of this application may be randomly combined, to achieve different technical effect. Various combinations are not listed in embodiments of this application.

In addition, although the operations of the methods in this disclosure are described in a particular order in the accompanying drawings, this does not require or imply that these operations need to be performed in the particular order, or that all the operations shown need to be performed to achieve the desired results. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that, the features and functions of two or more apparatuses according to this disclosure may be specific in one apparatus. Instead, features and functions of one apparatus described above may be further specific in a plurality of apparatuses.

According to the context, the term "when" used in the foregoing embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

## Claims

1. A method, comprising:
obtaining, by a first network device, first biometric identification information of a user of a first terminal device; and
sending, based on a first authentication request message that is received from a second network device and that is used to authenticate the user, the first biometric identification information to the second network device or a third network device, wherein the first biometric identification information is used to perform identity authentication on the user of the first terminal device.

2. The method according to claim 1, wherein the method further comprises:
determining that the first network device does not store the first biometric identification information, wherein
the obtaining, by the first network device, the first biometric identification information of the user of the first terminal device comprises: receiving, from the second network device, the first authentication request message that is used to authenticate the user, wherein the authentication request message carries the first biometric identification information; and
storing the first biometric identification information.

3. The method according to claim 1, wherein the method further comprises:
determining that the first network device stores the first biometric identification information; and
the obtaining, by the first network device, the first biometric identification information of the user of the first terminal device comprises: obtaining the first biometric identification information of the user of the first terminal device from the stored first biometric identification information.

4. The method according to claim 1, wherein the first authentication request message comprises an identifier of the first terminal device, second biometric identification information that is of the user and that is collected by the first terminal device, and an authentication identifier, and the method further comprises:
in response to the fact that the first network device does not store the second biometric identification information or stored biometric identification information does not match the second biometric identification information, verifying the second biometric identification information via a fifth network device.

5. The method according to claim 4, wherein the verifying the second biometric identification information via the fifth network device comprises:
sending the authentication identifier to the fifth network device, wherein the authentication identifier is used to verify the second biometric identification information;
when authentication succeeds at the fifth network device, receiving third biometric identification information corresponding to the second biometric identification information;
storing a relationship between the first terminal device and the second biometric identification information and a relationship between the first terminal device and the third biometric identification information; and
sending authentication response information to the second network device.

6. The method according to claim 5, wherein the second biometric identification information and the third biometric identification information are sent after being encrypted.

7. The method according to claim 5, wherein verifying the second biometric identification information via the fifth network device comprises:
sending the second biometric identification information and the authentication identifier to the fifth network device, wherein the authentication identifier is used to verify the second biometric identification information;
receiving an authentication result from the fifth network device; and
sending the authentication response information to the second network device.

8. The method according to any one of claims 1 to 7, further comprising:
receiving a registration request message from the first terminal device, wherein the registration request message comprises identification information of the first terminal device, feature identification capability information of the first terminal device, and/or anti-counterfeit authentication capability information of the first terminal device;
in response to the fact that the first network device stores feature identification capability information of the first terminal device and/or anti-counterfeit authentication capability information of the first terminal device, verifying whether the stored feature identification capability information and/or stored anti-counterfeit authentication capability information match the feature identification capability information and/or the anti-counterfeit authentication capability information that are/is carried in the registration request message; and
sending a registration request response to the first terminal device, wherein the registration request response comprises an anti-counterfeit authentication policy corresponding to the first terminal device.

9. The method according to any one of claims 1 to 7, further comprising:
receiving a registration request message from the first terminal device, wherein the registration request message comprises identification information of the first terminal device, feature identification capability information of the first terminal device, and/or anti-counterfeit authentication capability information of the first terminal device;
in response to the fact that the first network device does not store feature identification capability information of the first terminal device and/or anti-counterfeit authentication capability information of the first terminal device that are/is recorded by the first network device, storing the identification information of the first terminal device, the feature identification capability information of the first terminal device, and/or the anti-counterfeit authentication capability information of the first terminal device that are/is carried in the registration request message; and
sending a registration request response to the first terminal device based on the registration request message, wherein the registration request response comprises an anti-counterfeit authentication policy corresponding to the first terminal device.

10. The method according to any one of claims 1 to 7, further comprising:
receiving a registration request message from the first terminal device, wherein the registration request message does not comprise feature identification capability information of the first terminal device and anti-counterfeit authentication capability information of the first terminal device; and
sending a registration request response to the first terminal device, wherein the registration request response comprises a default anti-counterfeit authentication policy.

11. The method according to claim 8 or 9, further comprising:
sending an authentication policy synchronization message to the third network device, wherein the authentication policy synchronization message comprises the anti-counterfeit authentication policy.

12. The method according to claim 8 or 9, further comprising:
sending a media plane network device discovery request message to a fourth network device, wherein the media plane network device discovery request message comprises the anti-counterfeit authentication capability information;
receiving a media plane network device discovery response message from the fourth network device; and
sending the anti-counterfeit authentication policy to the third network device.

13. The method according to any one of claims 8 to 12, wherein the anti-counterfeit authentication policy is associated with a function supported by the first terminal device, and the anti-counterfeit authentication policy comprises:
authentication on a network side;
authentication on a terminal side;
authentication on both the network side and the terminal side; and/or
non-authentication on either the network side or the terminal side.

14. The method according to any one of claims 1 to 13, wherein the first authentication request message comprises the identifier of the first terminal device, and the method further comprises:
querying the stored first biometric identification information based on the identifier of the first terminal device.

15. The method according to any one of claims 1 to 14, further comprising:
receiving a second authentication request message from the third network device, wherein the second authentication request message comprises original information of service information or the second biometric identification information obtained from the original information and an identifier of the user of the first terminal device that is used to verify the second biometric identification information; and
sending an authentication response to the third network device.

16. A method, comprising:
receiving, by a second network device, a service request message from a first terminal device;
sending, to a first network device based on the received service request message, a first authentication request message that is used to authenticate a user of the first terminal device; and
receiving a first authentication response message for the first authentication request message from the first network device.

17. The method according to claim 16, wherein the first authentication response message comprises first biometric identification information of the user of the first terminal device, and the method further comprises:
sending the first biometric identification information and/or a detection algorithm to a third network device, wherein the first biometric identification information is used to authenticate the user of the first terminal device.

18. The method according to claim 16, wherein the first authentication request message and/or the first authentication response message comprise/comprises collected second biometric identification information, and the method further comprises:
sending the second biometric identification information to a third network device, wherein the second biometric identification information is used to authenticate the user of the first terminal device.

19. The method according to claim 16, wherein the first authentication request message comprises collected second biometric identification information and an authentication identifier.

20. A method, comprising:
receiving, by a third network device, first biometric identification information of a user of a first terminal device from a first network device or a second network device;
obtaining, based on a service message received from the first terminal device, second biometric identification information from the service message; and
authenticating the user based on the first biometric identification information and the second biometric identification information.

21. The method according to claim 20, further comprising:
storing an identifier of the first terminal device and the first biometric identification information.

22. The method according to claim 20 or 21, further comprising:
sending a second authentication request message to the first network device, wherein the second authentication request message comprises original information of the service message or the second biometric identification information and an identifier of the user of the first terminal device; and
receiving a second authentication response message for the second authentication request message from the first network device.

23. The method according to any one of claims 20 to 22, further comprising:
in response to a failure of the authentication, sending, to a second terminal device, authentication prompt information indicating that the authentication on the user fails.

24. The method according to any one of claims 20 to 23, further comprising:
receiving an anti-counterfeit authentication policy for the first terminal device from the first network device.

25. The method according to any one of claims 20 to 24, further comprising:
in response to success of the authentication, generating a media stream based on the second biometric identification information and signing the media stream; and
sending the media stream and the signature to the second terminal device.

26. The method according to any one of claims 20 to 25, further comprising:
receiving third biometric identification information from the first network device, wherein the third biometric identification information is provided by a fifth network device and corresponds to the second biometric identification information.

27. A method, comprising:
sending, by a first terminal device, a service request message to a second network device, wherein the service request message comprises first biometric identification information of a user of the first terminal device, and the first biometric identification information is used to authenticate the user of the first terminal device.

28. The method according to claim 27, further comprising:
sending a registration request message to the second network device, wherein the registration request message comprises identification information of the first terminal device, feature identification capability information of the first terminal device, and anti-counterfeit authentication capability information of the first terminal device; and
receiving a registration request response from the first network device, wherein the registration request response comprises an anti-counterfeit authentication policy corresponding to the first terminal device.

29. The method according to claim 27 or 28, wherein the service request message comprises an identifier of the first terminal device, second biometric identification information that is of the user and that is collected by the first terminal device, and an authentication identifier.

30. A method, comprising:
sending, by a second terminal device to a third network device, a second authentication request message that is used to authenticate a user of a first terminal device; and
receiving a second authentication response message for the second authentication request message from the third network device.

31. The method according to claim 30, further comprising:
receiving authentication prompt information from the third network device, wherein the authentication prompt information indicates that authentication on the user fails.

32. A method, comprising:
obtaining, by a first network device, first biometric identification information of a user of a first terminal device;
storing, by the first network device, the first biometric identification information;
receiving, by a second network device, a service request message from the first terminal device;
sending, by the second network device to the first network device based on the received service request message, a first authentication request message that is used to authenticate the user of the first terminal device; and
sending, by the first network device based on the first authentication request message of the user, the first biometric identification information to the second network device or a third network device, wherein the first biometric identification information is used to perform identity authentication on the user of the first terminal device.

33. The method according to claim 32, further comprising:
obtaining, by the third network device, second biometric identification information from a service message based on the service message received from the first terminal device; and
authenticating, by the third network device, the user based on the first biometric identification information and the second biometric identification information.

34. A system, comprising:
a first network device, configured to perform the method according to any one of claims 1 to 15;
a second network device, configured to perform the method according to any one of claims 16 to 19; and
a third network device, configured to perform the method according to any one of claims 20 to 26.

35. A computer-readable storage medium, wherein the computer-readable storage medium stores instructions, and when the instructions are executed by an electronic apparatus, the electronic apparatus is enabled to perform the method according to any one of claims 1 to 15, the method according to any one of claims 16 to 19, the method according to any one of claims 20 to 26, the method according to any one of claims 27 to 29, the method according to any one of claims 30 and 31, or the method according to any one of claims 32 and 33.

36. A computer program product, wherein the computer program product comprises instructions, and when the instructions are executed by an electronic apparatus, the electronic apparatus is enabled to perform the method according to any one of claims 1 to 15, the method according to any one of claims 16 to 19, the method according to any one of claims 20 to 26, the method according to any one of claims 27 to 29, the method according to any one of claims 30 and 31, or the method according to any one of claims 32 and 33.

37. A communication apparatus, comprising:
a unit or module configured to perform the method according to any one of claims 1 to 15, a unit or module configured to perform the method according to any one of claims 16 to 19, a unit or module configured to perform the method according to any one of claims 20 to 26, a unit or module configured to perform the method according to any one of claims 27 to 29, a unit or module configured to perform the method according to any one of claims 30 and 31, or a unit or module configured to perform the method according to any one of claims 32 and 33.

38. A communication apparatus, comprising:
a processor, configured to perform the method according to any one of claims 1 to 15, or configured to perform the method according to any one of claims 16 to 19, or configured to perform the method according to any one of claims 20 to 26, or configured to perform the method according to any one of claims 27 to 29, or configured to perform the method according to any one of claims 30 and 31, or configured to perform the method according to any one of claims 32 and 33.
